# FASCICULE DE BREVET EUROPEEN

(11) **EP 4 532 319 B1**
(45) Date de publication et mention de la délivrance du brevet: **11.02.2026**
(21) Numéro de dépôt: 23730850.7
(22) Date de dépôt: 26.05.2023
(51) Int. Cl.: B64C 11/26, B64C 27/473, B29D 99/00, F01D 5/28, F01D 5/30, B64C 11/06

(54) **AUBE COMPRENANT UNE STRUCTURE EN MATÉRIAU COMPOSITE ET PROCÉDÉ DE FABRICATION ASSOCIÉ**
SCHAUFEL MIT EINER STRUKTUR AUS VERBUNDSTOFF UND ZUGEHÖRIGES HERSTELLUNGSVERFAHREN
BLADE COMPRISING A STRUCTURE MADE OF COMPOSITE MATERIAL, AND ASSOCIATED MANUFACTURING METHOD

(30) Priorité: 31.05.2022 FR 2205243
(43) Date de publication de la demande: 09.04.2025
(73) Titulaire: SAFRAN AIRCRAFT ENGINES, 75015 Paris (FR)
(72) Inventeur: JOUDON, Vincent, 77550 MOISSY-CRAMAYEL (FR); COURTIER, Vivien Mickaël, 77550 MOISSY-CRAMAYEL (FR); GRAIL, Gaël Robert, 77550 MOISSY-CRAMAYEL (FR); RUIZ DE SOTTO, Miguel, 77550 MOISSY-CRAMAYEL (FR); JABLONSKI, Laurent, 77550 MOISSY-CRAMAYEL (FR)
(74) Mandataire: Regimbeau
(86) Numéro de dépôt international: PCT/FR2023/050740
(87) Numéro de publication internationale: WO 2023/233092

(56) Documents cités:
- EP-A1- 0 610 273
- EP-A2- 2 653 379
- EP-B1- 0 610 273
- WO-A1-2012/001279
- WO-A1-2022/018353
- US-A- 4 884 948

## Description

### DOMAINE TECHNIQUE

L'invention concerne une aube comprenant une structure en matériau composite et le procédé de fabrication associé.

### ETAT DE LA TECHNIQUE

L'intérêt des moteurs à soufflante non-carénée est que le diamètre de la soufflante n'est pas limité par la présence d'un carénage, de sorte qu'il est possible de concevoir un moteur présentant un fort taux de dilution, et par conséquent une consommation réduite de carburant.

Ainsi, dans ce type de moteur, les aubes de la soufflante peuvent présenter une grande envergure.

De plus, ces moteurs comprennent généralement un mécanisme permettant de modifier l'angle de calage des aubes afin d'adapter la poussée générée par la soufflante en fonction des différentes phases de vol.

Cependant, la conception de telles aubes nécessite de prendre en compte des contraintes antagonistes.

D'un côté, le dimensionnement de ces aubes doit permettre des performances aérodynamiques optimales (maximiser le rendement et fournir la poussée tout en minimisant les pertes). L'amélioration des performances aérodynamiques de la soufflante tend vers une augmentation du taux de dilution (BPR), ce qui se traduit par une augmentation du diamètre externe, et donc de l'envergure de ces aubes.

D'un autre côté, il est également nécessaire de garantir une résistance aux contraintes mécaniques pouvant s'exercer sur ces aubes tout en limitant leur signature acoustique.

Par ailleurs, sur les architectures à soufflante non-carénée, le démarrage du moteur est généralement effectué avec un calage très ouvert. En effet, un calage très ouvert permet de consommer la puissance par le couple, ce qui assure la sécurité machine en garantissant des régimes de soufflante faibles.

Or, avec un calage très ouvert, les aubes subissent un écoulement aérodynamique turbulent, complètement décollé, qui génère une excitation vibratoire large bande. En particulier sur des aubes à large corde et de grande envergure, l'effort de flexion est intense, bien que le régime moteur ne soit pas maximal.

En fonctionnement normal, durant les phases au sol et en vol, le calage est modifié (l'angle de calage est plus fermé). L'écoulement aérodynamique est donc parfaitement sain (recollé au profil aérodynamique). Les sollicitations large bande disparaissent, le régime de rotation étant plus élevé, et l'effort de flexion est maitrisé.

Ces aubes peuvent être réalisées en matériau métallique. Si les aubes en matériau métallique ont une bonne résistance mécanique, elles présentent toutefois l'inconvénient d'avoir une masse relativement importante.

Afin de réduire cette masse, il est souhaitable de pouvoir fabriquer ces aubes en matériau composite. Toutefois, les efforts aérodynamiques intenses auxquelles ces aubes seraient soumises risqueraient d'endommager l'aube et/ou le moyeu dans la zone d'interface entre ces aubes et le moyeu du rotor de la soufflante, au niveau du pied de l'aube.

Le document WO2022/18353 décrit une aube comprenant une pale à profil aérodynamique et un longeron. Le longeron comprend une âme en matériau composite, l'âme en matériau composite présentant une première partie à l'intérieur de la pale à profil aérodynamique et une deuxième partie s'étendant depuis la première partie à l'extérieur de la pale à profil aérodynamique, de sorte à former un pied d'aube. Le longeron comprend en outre deux coques métalliques qui recouvrent un renflement du pied d'aube en matériau composite. Le document WO 2012/001279 A1 divulgue une aube comprenant une structure à profil aérodynamique comprenant deux peaux en vis-à-vis obtenues par tissage tridimensionnel d'un renfort fibreux densifié par une matrice, un longeron constitué d'un renfort fibreux obtenu par tissage tridimensionnel et densifié par une matrice, ledit longeron comprenant une première partie s'étendant à l'extérieur de ladite structure à profil aérodynamique et destinée à être reliée à un moyeu d'entraînement en rotation de l'aube et une deuxième partie disposée à l'intérieur de la structure à profil aérodynamique entre les deux peaux. La deuxième partie du longeron a une épaisseur sensiblement similaire à celle des peaux de la structure à profil aérodynamique. En outre, le renfort fibreux de la deuxième partie du longeron a une même armure de tissage que celle du renfort des peaux de la structure à profil aérodynamique.

Les coques métalliques constituent un renfort structural du pied d'aube. Toutefois, dans une telle configuration, il subsiste un risque de décollement des coques métalliques et, dès lors, un changement brutal du comportement mécanique du système.

### BREVE DESCRIPTION DE L'INVENTION

Un but de l'invention est de concevoir une aube comprenant une pale à profil aérodynamique et un pied d'aube en matériau composite renforcé par des coques métalliques résistante au décollement des coques.

A cet effet, l'invention propose une aube comprenant :
- une pale à profil aérodynamique comprenant un premier renfort fibreux obtenu par tissage tridimensionnel et une première matrice dans laquelle est noyé le premier renfort fibreux, la partie de pale à profil aérodynamique comprenant une cavité formée par une déliaison du premier renfort fibreux,

- un pied d'aube destinée à être relié à un mécanisme de calage variable de l'aube, et
- un longeron comprenant une âme en matériau composite et deux coques métalliques fixées sur l'âme en matériau composite, de part et d'autre de l'âme en matériau composite, l'âme en matériau composite comprenant une première partie s'étendant à l'intérieur de la cavité de la pale, et une deuxième partie formant le pied d'aube,
les deux coques métalliques fixées sur l'âme en matériau composite s'étendant sur la deuxième partie et se prolongeant sur la première partie à l'intérieur de la cavité de la pale à profil aérodynamique.

Le prolongement évite la transmission des efforts aérodynamique depuis la pale à profil aérodynamique jusqu'aux coques métalliques par l'intermédiaire du matériau composite, ce qui soumettrait la frontière entre les coques métalliques et le matériau composite à d'importants efforts de cisaillement pouvant engendrer le décollement des coques. Les coques métalliques qui se prolongent à l'intérieur de la cavité assurent directement la transmission des efforts aérodynamiques vers la zone d'accroche par l'intermédiaire d'efforts de flexion.

Selon d'autres caractéristiques optionnelles de l'invention prises seules ou en combinaison lorsque cela est techniquement possible :
- le pied d'aube présente une forme de révolution autour d'un axe de calage de l'aube, et la première partie présente une première épaisseur, mesurée dans un plan passant par l'axe de calage et un point d'intersection entre une ligne de bord d'attaque de la pale et une ligne de corde de limite de veine située à une limite entre la pale et le pied, qui augmente depuis la corde de limite de veine vers l'intérieur de la pale sur au moins une portion de la première partie ;
- la première partie présente une deuxième épaisseur, mesurée dans un deuxième plan, perpendiculaire au premier plan, qui diminue depuis la corde de limite de veine vers l'intérieur de la pale sur la portion de la première partie ;
- le premier renfort fibreux comprend des torons de trames s'étendant depuis le bord d'attaque jusqu'au bord de fuite et délimitant la déliaison, la déliaison étant délimitée en amont par des premiers entrecroisement entre les torons de trame et aval par des deuxièmes entrecroisement entre les trames ;
- une distance mesurée entre un premier entrecroisement et un deuxième entrecroisement des torons de trames délimitant la déliaison, dans un plan perpendiculaire à l'axe de calage, augmente depuis le pied d'aube vers l'intérieur de la pale ;
- l'aube comprend une pièce de conformation en matériau rigide alvéolé, le matériau rigide alvéolé étant préférentiellement une mousse de polyuréthane, la pièce de conformation étant fixée sur la première partie du longeron et positionnée dans **la** cavité de la pale à profil aérodynamique ;
- les deux coques métalliques fixées sur l'âme en matériau composite ne sont pas jointives entre elles, alors disjointes entre elles sans contact direct ;
- la première partie de l'âme en matériau composite comprend des facettes et chacune des deux coques métalliques présente des facettes propres à être positionnées en contact avec les facettes de la première partie, de sorte à définir un positionnement relatif de chacune des coques par rapport à l'âme ;
- la pale à profil aérodynamique présente une première extrémité reliée au pied d'aube et une deuxième extrémité, opposée à la première extrémité, et dans laquelle la déliaison du premier renfort fibreux formant la cavité dans laquelle est insérée la première partie du longeron s'étend depuis une première ouverture débouchant à la première extrémité jusqu'à une deuxième ouverture débouchant dans un bord d'attaque de la pale ;
- le premier renfort fibreux est obtenu par tissage tridimensionnel de torons de fibres de carbone et la première matrice comprend une résine époxy ;
- l'âme en matériau composite du longeron comprend un deuxième renfort fibreux obtenu par tissage tridimensionnel et une deuxième matrice dans laquelle est noyé le deuxième renfort fibreux ;
- le deuxième renfort fibreux comprend une pluralité de couches de renfort fibreux superposées entre elles, et disposées de telle sorte les couches de renfort fibreux présentent des raideurs qui diminuent lorsque l'on parcourt le deuxième renfort fibreux depuis l'intérieur du deuxième renfort fibreux vers l'extérieur du deuxième renfort fibreux ;
- le pied d'aube présente une forme de révolution autour d'un axe de calage de l'aube, et la deuxième partie présente une dimension radiale mesurée selon un axe radial perpendiculaire à l'axe de calage, qui augmente continument puis diminue continument lorsque l'on parcourt la deuxième partie le long de l'axe de calage en s'éloignant de la première partie, de manière à former un renflement.

L'invention concerne également un ensemble d'aube comprenant :
- une aube telle que précédemment décrite, et

- un dispositif d'attache comprenant une première pièce d'attache propre à venir en appui sur une portion du pied d'aube dans laquelle la dimension radiale augmente continument, une deuxième pièce d'attache propre à venir en appui sur une portion du pied d'aube dans laquelle la dimension radiale diminue continument, et une troisième pièce d'attache présentant des reliefs propre à coopérer avec des reliefs de la première pièce d'attache pour bloquer la première pièce d'attache en translation selon l'axe de calage par rapport à la troisième pièce d'attache, la deuxième pièce d'attache présentant un orifice et la troisième pièce d'attache présentant un orifice destiné à être mis en regard de l'orifice de la deuxième pièce d'attache, de manière à permettre l'insertion d'un organe de blocage dans les orifices en regard afin de maintenir en compression le renflement entre la première pièce d'attache et la deuxième pièce d'attache.

Un autre but de l'invention est de concevoir un procédé de fabrication d'une aube comprenant une pale à profil aérodynamique et un pied d'aube en matériau composite renforcé par des coques métalliques résistante au décollement des coques.

A ce titre, l'invention propose un procédé de fabrication d'une aube telle que décrite précédemment comprenant des étapes successives de :
- réaliser l'âme de longeron en matériau composite comprenant une première partie et une deuxième partie,
- fixer les deux coques métalliques sur l'âme du longeron, de sorte que chacune des deux coques métalliques s'étendent sur la deuxième partie et se prolongent sur la première partie,
- réaliser une ébauche fibreuse par tissage tridimensionnel de torons de fibres, l'ébauche présentant une déliaison formant une cavité,
- mettre en forme l'ébauche fibreuse pour obtenir une préforme à profil aérodynamique, la mise en forme comprenant l'insertion de la première partie du longeron à l'intérieur de la cavité,
- injecter une résine dans un moule contenant la première ébauche fibreuse et le longeron pour obtenir une aube comprenant une pale à profil aérodynamique ayant un premier renfort fibreux densifié par une matrice, la première partie du longeron s'étendant à l'intérieur de la cavité de la pale, et la deuxième partie du longeron formant le pied d'aube.

Selon d'autres caractéristiques optionnelles de l'invention prises seules ou en combinaison lorsque cela est techniquement possible :
- l'étape de mettre en forme l'ébauche fibreuse est précédée d'une étape d'assembler le longeron avec une pièce de conformation en matériau rigide alvéolé, le matériau rigide alvéolé étant préférentiellement une mousse de polyuréthane, de sorte que la première partie du longeron est insérée avec la pièce de conformation à l'intérieur de la cavité formée par la déliaison de l'ébauche fibreuse ;
- la déliaison de l'ébauche fibreuse est prolongée jusqu'à une deuxième ouverture dans la ligne de bord d'attaque de la pale, et le longeron est inséré à l'intérieur de la cavité formée par la déliaison de l'ébauche fibreuse par l'ouverture ;
- l'étape de réaliser l'âme du longeron comprend usiner un renflement présentant des facettes sur une extrémité de la première partie de l'âme et l'étape de fixer les deux coques métalliques sur l'âme comprend positionner chacune des deux coques contre les facettes, de sorte à définir un positionnement relatif de chacune des coques par rapport à l'âme.

### BREVE DESCRIPTION DES FIGURES

D'autres caractéristiques et avantages de l'invention ressortiront de la description détaillée qui va suivre, en référence aux dessins annexés, sur lesquels :
- la figure 1 représente de manière schématique un exemple de moteur incluant une soufflante non carénée.
- la figure 2 représente de manière schématique une aube de soufflante et un dispositif d'attache permettant de modifier l'angle de calage des aubes de soufflante autour de l'axe de calage.
- la figure 3A représente de manière schématique un longeron de l'aube selon une coupe dans un premier plan comprenant l'axe de calage et le point d'intersection entre la ligne de bord d'attaque et la corde de limite de veine entre une pale à profil aérodynamique de l'aube et un pied de l'aube.
- la figure 3B représente de manière schématique le longeron de l'aube selon une coupe dans un deuxième plan contenant l'axe de calage et perpendiculaire au deuxième plan.
- la figure 4 représente de manière schématique l'âme du longeron en matériau composite sur une coupe A-A transversale du longeron, selon un plan perpendiculaire à l'axe de calage.
- la figure 5 représente de manière schématique des facettes permettant le positionnement relatif des coques métalliques et de l'âme en matériau composite du longeron sur une coupe C-C transversale du longeron.
- la figure 6 représente un procédé de fabrication d'une aube comportant un longeron.
- la figure 7 représente de manière schématique une étape d'insertion du longeron dans la pale de l'aube.

### DESCRIPTION DETAILLEE DE MODES DE REALISATION

### Description de l'aube

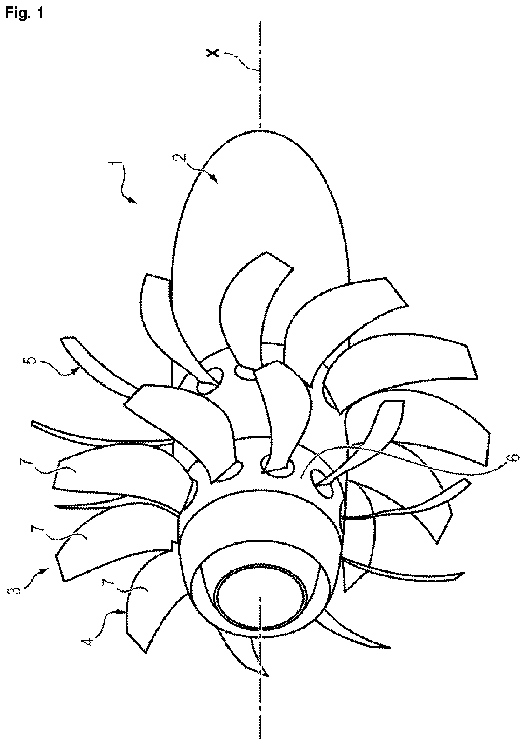

Sur la figure 1, le moteur 1 représenté est un moteur de type « Open Rotor », en configuration couramment qualifiée de « pusher » (i.e. la soufflante est placée à l'arrière du générateur de puissance avec une entrée d'air située sur le côté, à droite sur la figure 1).

Le moteur comprend une nacelle 2 destinée à être fixée à un fuselage d'un aéronef, et une soufflante 3 non-carénée. La soufflante 3 comprend deux rotors de soufflante contrarotatifs 4 et 5. Autrement dit, lorsque le moteur 1 est en fonctionnement, les rotors 4 et 5 sont entrainés en rotation par rapport à la nacelle 2 autour d'un même axe de rotation X (qui coïncide avec un axe principal du moteur), en sens opposés.

Dans l'exemple illustré sur la figure 1, le moteur 1 est un moteur de type « Open Rotor », en configuration « pusher », à rotors de soufflante contrarotatifs. Cependant, l'invention n'est pas limitée à cette configuration. L'invention s'applique également à des moteurs de type « Open Rotor », en configuration « puller » (i.e. la soufflante est placée en amont du générateur de puissance avec une entrée d'air située avant, entre ou juste derrière les deux rotors de soufflante).

**En** outre, l'invention s'applique également à des moteurs présentant des architectures différentes, telles qu'une architecture comprenant un rotor de soufflante comprenant des aubes mobiles et un stator de soufflante comprenant des aubes fixes, ou bien un unique rotor de soufflante.

L'invention est applicable à des architectures de type turbopropulseur (comprenant un unique rotor de soufflante).

Sur la figure 1, chaque rotor de soufflante 4, 5 comprend un moyeu 6 monté rotatif par rapport à la nacelle 2 et une pluralité d'aubes 7 fixées au moyeu 6. Les aubes 7 s'étendent sensiblement radialement par rapport à l'axe de rotation X du moyeu.

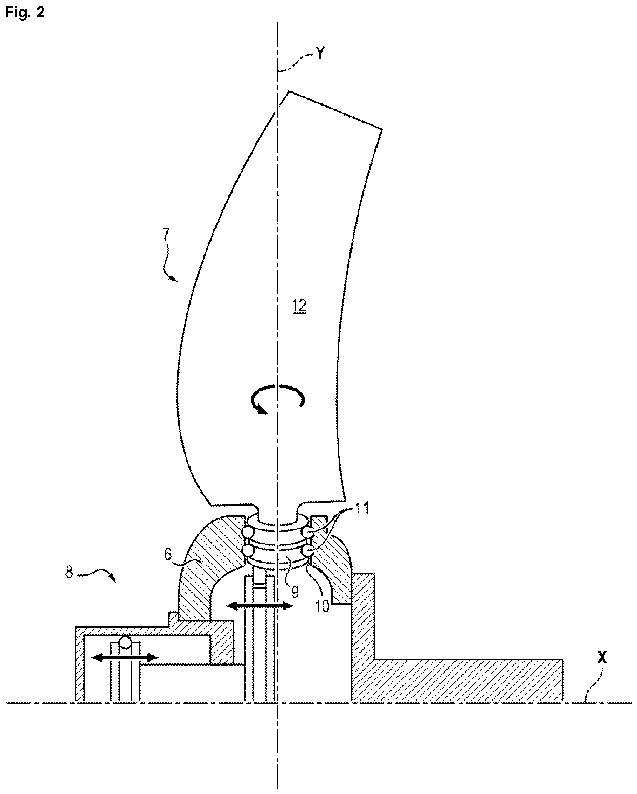

Comme illustré sur la figure 2, la soufflante 3 comprend en outre un mécanisme d'actionnement 8 permettant de modifier collectivement l'angle de calage des aubes des rotors, afin d'adapter les performances du moteur aux différentes phases de vol. A cet effet, chaque aube 7 comprend un pied d'aube 9 et une pale à profil aérodynamique 12. Le pied d'aube 9 est monté rotatif par rapport au moyeu 6 autour d'un axe de calage Y. Plus précisément, le pied d'aube 9 est montée rotatif à l'intérieur d'un dispositif d'attache 10 ménagé dans le moyeu 6, par l'intermédiaires de billes 11 ou d'autres éléments roulants.

La pale à profil aérodynamique 12 présente une première extrémité reliée au pied d'aube et une deuxième extrémité, opposée à la première extrémité. La partie de pale 12 à profil aérodynamique est destinée à s'étendre dans une veine d'air du moteur, lorsque le moteur est en fonctionnement, afin de générer une portance. **En** revanche, le pied d'aube 9 est destiné à s'étendre hors de la veine d'air.

La pale à profil aérodynamique 12 présente une structure en matériau composite comprenant un premier renfort fibreux obtenu par tissage tridimensionnel de torons et une première matrice dans laquelle est noyée le premier renfort fibreux. Le premier renfort fibreux est obtenu par exemple par tissage tridimensionnel de torons de fibres de carbone et la première matrice peut comprendre une résine époxy.

Le premier renfort fibreux comprend une déliaison qui délimite une cavité à l'intérieur de la pale à profil aérodynamique 12. La cavité débouche sur une première ouverture 25 à la première extrémité de la pale à profil aérodynamique 12. La cavité s'étend préférentiellement depuis cette première ouverture 25 jusqu'à une deuxième ouverture 24 débouchant dans un bord d'attaque de la pale.

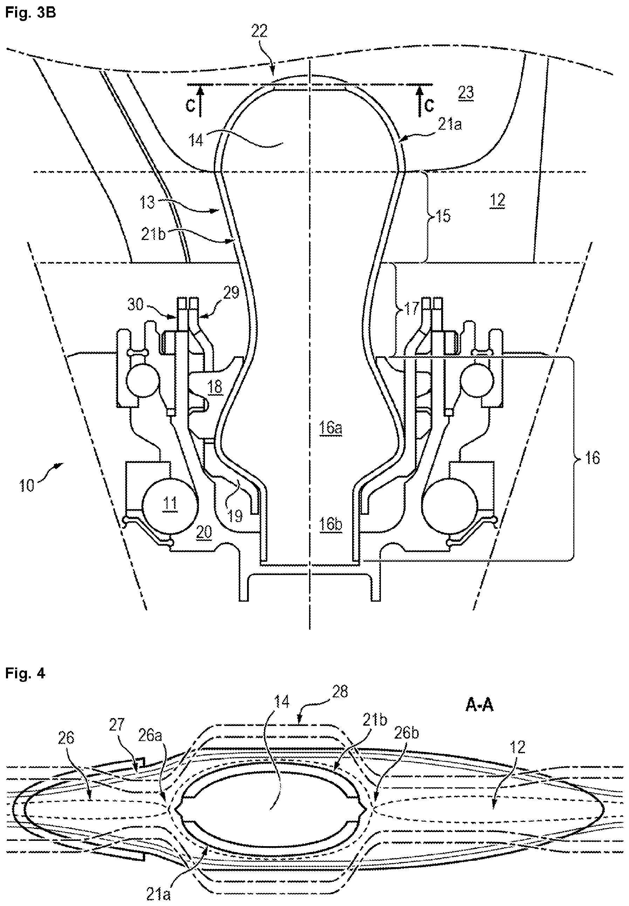

**En** référence à la figure 4, le premier renfort fibreux peut comprendre un premier ensemble de torons de trames 26 qui s'étendent depuis le bord d'attaque jusqu'au bord de fuite de la pale à profil aérodynamique et qui délimitent la déliaison en amont par un premier entrecroisement 26a entre lesdites trames du premier ensemble de torons de trames et en aval par un deuxième entrecroisement 26b.

Le premier renfort fibreux peut comprendre en outre un second ensemble de torons de trames 27 qui s'étendent en peau de pale à profil aérodynamique (c'est-à-dire qu'il s'agit des torons les plus proches de la surface externe de la pale à profil aérodynamique 12), depuis le bord d'attaque jusqu'au bord de fuite, sans ou avec peu d'entrecroisements localement dans les zones de faible épaisseur de la préforme, de sorte à donner la forme de la pale. Le second ensemble de torons de trames 27 constitue un renfort contre la déformation de la pale, notamment au moment de l'injection de la résine destinée à former la première matrice. Enfin, un troisième ensemble de torons de trames 28 peut également s'étendre depuis le bord d'attaque jusqu'au bord de fuite. Les sorties de trames de ce troisième ensemble 28 assurent les variations rapides d'épaisseurs de la pale 12.

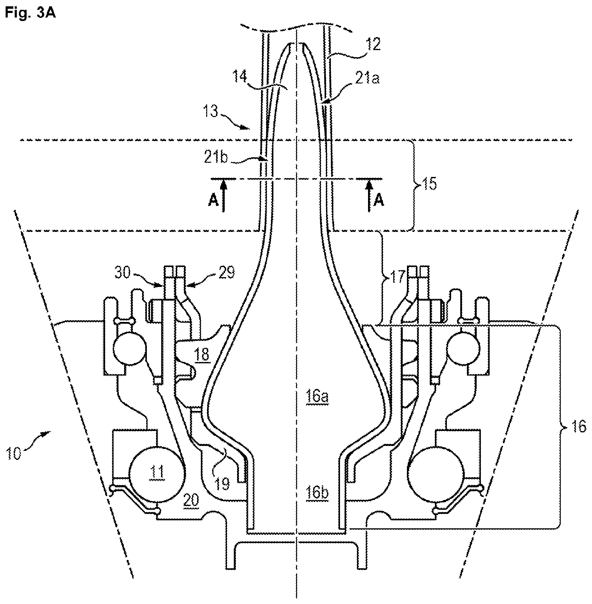

L'aube de soufflante 7 comprend également un longeron 13 représenté sur les figures 3A et 3B. Le longeron comprend lui-même une âme en matériau composite 14.

L'âme en matériau composite 14 comprend une première partie s'étendant à l'intérieur de la cavité de la pale, et une deuxième partie formant le pied d'aube 9.

La première partie de l'âme permet la transmission des efforts subis par la pale à profil aérodynamique 12 vers le pied d'aube 9. La forme de la première partie de l'âme est choisie de sorte à assurer la rétention de la pale 12 sur le pied 9.

On définit un premier plan qui passe par l'axe de calage Y et un point d'intersection entre une ligne de bord d'attaque de la pale et une ligne de corde de limite de veine située à une limite entre la pale 12 et le pied 9, le longeron 13 étant représenté dans le premier plan sur la Figure 3A. Comme cela est visibles sur la Figure 3A, la première partie présente une première épaisseur qui, mesurée dans le premier plan, augmente préférentiellement depuis la corde de limite de veine vers l'intérieur de la pale sur au moins une portion 15 de la première partie.

Réciproquement, une distance mesurée entre un premier entrecroisement 26a et un deuxième entrecroisement 26b de deux torons de trames du premier renfort fibreux, les premier et deuxième entrecroisements 26a, 26b délimitant la déliaison, augmente depuis la première ouverture de la cavité au niveau de la corde de limite de veine vers l'intérieur de la pale dans le même premier plan, de sorte que les torons de trame 26 entourent au plus près la première partie de l'âme du longeron 13.

La première partie peut être fixée dans la cavité directement par la résine constituant la première matrice ou par l'intermédiaire d'un film de colle.

Lorsque la soufflante est en rotation, l'aube 7 subit des efforts centrifuges orientés selon une direction radiale par rapport à l'axe de rotation de la soufflante, qui tendent à séparer la pale à profil aérodynamique 12 du longeron 13. L'ancrage de la pale 12 sur le longeron 13 est assuré à la fois par la colle ou la résine et par le rétrécissement de section conjoint de la première partie et de la cavité depuis l'intérieur de la pale vers la corde limite de veine. Ainsi, même en cas de rupture de l'interface entre le longeron 13 et la résine ou le film de colle, le rétrécissement de section assure la rétention de la pale à profil aérodynamique 12 sur le longeron 13.

**En** outre, comme cela est visible sur la figure 3B, la première partie de l'âme présente une deuxième épaisseur qui, mesurée dans un deuxième plan comprenant l'axe de calage Y et perpendiculaire au premier plan, diminue depuis la corde de limite de veine vers l'intérieur de la pale sur la portion 15 de la première partie.

Comme visible sur les figures 3A ou 3B, la deuxième partie de l'âme comprend deux portions. La première portion de la deuxième partie de l'âme ou portion d'accroche 16, est fixée à l'intérieur du dispositif d'attache 10 et assure la fonction d'accroche de l'aube au moyeu. La deuxième portion, dite échasse 17, fait le lien entre la portion d'accroche 16 située à l'intérieur du dispositif d'attache 10 et la première partie de l'âme située à l'intérieur de la pale.

L'échasse 17 assure la transmission des efforts aérodynamiques depuis la première partie de l'âme vers la zone d'accroche. Une première dimension de l'échasse 17 mesurée dans le premier plan augmente lorsqu'on se déplace de la zone d'accroche vers la pale. Au contraire, une deuxième dimension de l'échasse 17 mesurée dans le deuxième plan diminue lorsqu'on se déplace dans la même direction pour atteindre, à la limite de la veine, la dimension imposée par la pale à profil aérodynamique 12. L'augmentation de la section de l'échasse 17 de la zone d'accroche vers la pale à profil aérodynamique 12 dans le premier plan permet à l'échasse 17 d'assurer une meilleure transmission des efforts.

La première portion de la deuxième partie 16 est destinée à être insérée dans le dispositif d'attache 10 à calage variable de l'aube 7. Une dimension radiale de la première portion 16 mesurée selon un axe radial perpendiculaire à l'axe de calage Y augmente continument lorsque l'on parcourt la première portion de la deuxième partie le long de l'axe de calage Y en s'éloignant de la première partie définissant une première surface tronconique dite « surface de portée supérieure ». Puis, la dimension radiale diminue continument, définissant une deuxième surface tronconique dite « surface de portée inférieure ». Une telle évolution de la dimension radiale correspond à un renflement 16a. Autrement dit, la première portion possède une forme de bulbe.

Lorsque la première portion 16 est insérée dans le dispositif d'attache 10 et que l'aube 7 est en rotation, la surface de portée supérieure assure la rétention de l'aube 7 sous l'effet de la force centrifuge assurant ainsi la reprise des efforts en traction sensiblement radiaux par rapport à l'axe X. La surface de portée supérieure assure en outre la reprise des efforts de flexion tangentiels s'exerçant en circonférentiel par rapport à l'axe X sur la pale à profil aérodynamique 12, les efforts de flexion résultant du brassage de l'air par la pale.

La surface de portée inférieure permet d'appliquer une pré-charge lors du montage du pied d'aube 9 dans le dispositif d'attache 10, c'est-à-dire que le pied d'aube 9 est pressé entre la surface de portée supérieure et la surface de portée inférieure.

La première portion de la deuxième partie 16 peut comprendre en outre un organe de calage 16b qui s'étend depuis la surface de portée inférieure. L'organe de calage 16b ne présente pas de symétrie de révolution autour de l'axe de calage Y de sorte que l'organe de calage 16b permet de contrôler le calage de l'aube 7, notamment en cas de sur-couple survenant par exemple lors d'une ingestion d'oiseau. L'organe de calage 16b intervient donc comme organe de sureté intégrée.

Le dispositif d'attache 10 à calage variable comprend une première pièce d'attache segmentée 18 propre à venir en appui sur la portion du pied d'aube 9 dans laquelle la dimension radiale augmente continument.

Le dispositif d'attache 10 comprend en outre une deuxième pièce d'attache 19, dit bague interne de roulement, qui est propre à venir en appui sur la portion du pied d'aube 9 dans laquelle la dimension radiale diminue continument.

Enfin, le dispositif d'attache 10 comprend une troisième pièce d'attache 20. La troisième pièce d'attache 20 présente des reliefs propres à coopérer avec des reliefs de la première pièce d'attache 18 pour bloquer la première pièce d'attache 18 en translation selon l'axe de calage Y par rapport à la troisième pièce d'attache 20.

La deuxième pièce d'attache 19 présente un orifice 29. La troisième pièce d'attache 20 présente un orifice 30 destiné à être mis en regard de l'orifice 29 de la deuxième pièce d'attache 19, de manière à permettre l'insertion d'un organe de blocage, par exemple une vis, dans les orifices 29, 30 en regard afin de maintenir en compression le renflement 16a entre la première pièce d'attache 18 et la deuxième pièce d'attache 19.

L'âme en matériau composite 14 du longeron 13 comprend un deuxième renfort fibreux obtenu par tissage tridimensionnel et une deuxième matrice dans laquelle est noyé le deuxième renfort fibreux.

Le deuxième renfort fibreux peut être tissé en trois dimensions et présenter une déliaison délimitant une cavité centrale dans laquelle est insérée un matériau de conformation, par exemple une mousse de polyuréthane. Le matériau de conformation permet d'obtenir la forme et l'épaisseur souhaitées pour le longeron.

Alternativement, le deuxième renfort fibreux peut comprendre une pluralité de couches de renfort fibreux superposées entre elles. Selon ce mode de réalisation, chaque couche de renfort fibreux s'étend sur toute la longueur de l'âme, l'épaisseur de chaque couche variant sur ladite longueur. Les variations d'épaisseur de chaque couche s'additionnant, il ainsi possible d'obtenir la forme de l'âme souhaitée avec notamment les renflements attendus.

Alternativement encore, le deuxième renfort fibreux peut comprendre une couche de renfort fibreux dont la largeur est sensiblement égale à la longueur du longeron, la couche de renfort fibreux étant enroulée sur elle-même. Les variations d'épaisseur de la couche de renfort fibreux sur sa largeur permettent d'obtenir la forme souhaitée pour le longeron.

La raideur, ou module de Young, du deuxième renfort fibreux peut varier dans les différentes zones du deuxième renfort fibreux. Ainsi, la raideur du deuxième renfort fibreux peut avantageusement diminuer lorsqu'on parcourt le deuxième renfort fibreux depuis l'intérieur du deuxième renfort fibreux vers l'extérieur du deuxième renfort fibreux.

A titre d'exemple, la variation de raideur entre le coeur et la peau du deuxième renfort fibreux peut être obtenue dans le cas d'une couche de renfort fibreux enroulé sur elle-même si la couche de renfort fibreux ne présente pas la même raideur sur toute sa longueur.

A titre d'exemple encore, la variation de raideur peut être obtenue par superposition d'une pluralité de couches de renfort fibreux, lesdites couches étant alors disposées de telle sorte qu'elles présentent des raideurs qui diminuent lorsque l'on parcourt le deuxième renfort fibreux depuis l'intérieur du deuxième renfort fibreux vers l'extérieur du deuxième renfort fibreux. La raideur varie alors entre les différentes couches de renfort fibreux et au sein de chaque couche.

La variation de raideur peut également être obtenue lorsque le deuxième renfort fibreux comprend une couche de renfort fibreux, la raideur de la couche variant sur l'épaisseur et/ou la largeur de la couche.

Outre l'âme en matériau composite 14, le longeron comprend deux coques métalliques 21a,21b fixées sur l'âme 14, par exemple par assemblage mécanique ou préférentiellement par collage. Les deux coques métalliques 21a, B21b sont positionnées de part et d'autre de l'âme 14, en coquilles de noix. Les deux coques métalliques 21a, 21b sont des empreintes de l'âme en matériau composite 14, de sorte que la forme du longeron 13 qui comprend les coques métalliques 21a, 21b et l'âme en matériau composite 14 est similaire à la forme de l'âme 14 précédemment décrite.

Les deux coques métalliques 21a, 21b s'étendent sur la deuxième partie de l'âme 14 et se prolongent sur la première partie à l'intérieur de la cavité de la pale à profil aérodynamique 12. Ainsi, selon un mode de réalisation, les deux coques métalliques 21a, 21b recouvrent la portion d'accroche 16 en forme de bulbe 16a prolongée par l'organe de calage 16b, l'échasse 17 et au moins une portion de la première partie de l'âme à l'intérieur de la cavité. Selon un mode de réalisation particulier, les deux coques métalliques 21a, 21b se prolongent jusqu'à l'extrémité de la première partie de l'âme 14.

Au niveau de la portion sur laquelle se prolongent les coques métalliques 21a, 21b à l'intérieur de la cavité, le longeron 13 est donc fixé à la pale à profil aérodynamique 12 par l'intermédiaire des coques métalliques 21a, 21b, soit directement par la résine, soit par un film de colle comme précédemment mentionné.

Les deux coques métalliques 21a, 21b constituent un renfort structural de l'âme en matériau composite 14. Leur prolongement à l'intérieur de la cavité de la pale à profil aérodynamique 12 assure une transmission des efforts aérodynamiques depuis la pale 12 qui est plus directe que dans une configuration dans laquelle les coques s'étendraient sur la deuxième partie de l'âme mais ne se prolongeraient pas à l'intérieur de la cavité. **En** effet, l'absence de prolongement des coques métalliques sur la première partie de l'âme contraindrait à une transmission des efforts depuis la pale jusqu'aux coques par l'intermédiaire du matériau composite, soumettant l'échasse 17 à des efforts de cisaillement. Les coques métalliques 21a, 21b qui se prolongent à l'intérieur de la cavité assurent directement la transmission des efforts aérodynamiques vers la zone d'accroche par l'intermédiaire d'efforts de flexion.

**En** outre, le prolongement des coques 21a, 21b à l'intérieur de la pale à profil aérodynamique 12 assure une continuité des raideurs et permet d'éviter des discontinuités de caractéristiques mécaniques macroscopiques entre la zone d'accroche 16, l'échasse 17, et la pale à profil aérodynamique 12 au moins à proximité de la limite d'air de veine. Les coques 21a et 21b participent à une transmission des efforts aérodynamiques de flexion et des efforts centrifuges de traction qui s'exercent sur la pale à profil aérodynamique 12 vers la zone d'accroche 16. Cela évite que ces efforts transitent uniquement par l'âme en matériau composite 14 dans la zone amincie de l'échasse 17 où l'âme en matériau 14 composite présente une épaisseur réduite dans le deuxième plan (figure 3B), et où par conséquent ces efforts se concentrent.

Enfin, dans une configuration dans laquelle les coques métalliques s'étendraient sur la première partie de l'âme mais ne se prolongeraient pas à l'intérieur de la cavité de la pale, l'extrémité des coques métalliques considérée lorsqu'on se déplace vers la pale constitueraient un coin libre susceptible de concentrer les contraintes. La concentration des contraintes sur le coin pourrait induire le décollement des coques. Le prolongement des coques métalliques 21a, 21b à l'intérieur de la cavité permet donc d'éviter le décollement des coques 21a, 21b et le changement brutal de comportement mécanique qui en résulterait.

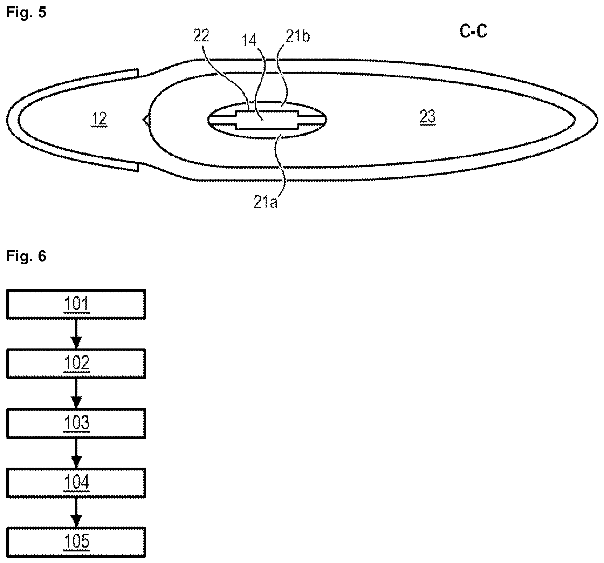

Afin de définir le positionnement relatif de chacune des coques 21a, 21b par rapport à l'âme en matériau composite 14, chacune des deux coques métalliques 21a, 21b peut présenter des facettes 22. Selon ce mode de réalisation représenté plus en détail sur la figure 5, la première partie de l'âme comprend également des facettes, les facettes de chacune des deux coques métalliques 21a, 21b sont positionnées en contact avec les facettes 22 de la première partie de l'âme.

Préférentiellement, les deux coques métalliques 21a, 21b fixées sur l'âme en matériau composite 14 ne sont pas jointives entre elles, c'est-à-dire disjointes entre elles sans contact direct, de sorte à permettre une bonne fixation des coques métalliques 21a, 21b sur l'âme en matériau composite 14. **En** particulier, lors d'une fixation par collage, il s'agit de ne pas laisser d'espace entre chacune des deux coques métalliques 21a, 21b et l'âme en matériau composite 14. Si les coques métalliques 21a, 21b ne sont pas correctement plaquées contre l'âme en matériau composite 14, il y a un risque de discontinuité de comportement mécanique, par exemple en cas de choc lors d'un contact avec un oiseau, ce qui pourrait entraîner l'apparition de zones de fragilisation internes dans l'aube.

Selon un mode de réalisation, lorsque le longeron 13 est positionné dans la cavité de la pale à profil aérodynamique 12, chacune des deux coques métalliques 21a, 21b s'étend autour de l'âme 14 depuis le bord d'attaque jusqu'au bord de fuite, de sorte que la première des deux coques métalliques 21a est globalement positionnée du côté de l'intrados de la pale et la deuxième des deux coques métalliques 21b est globalement positionnée du côté de l'extrados de la pale.

Selon un mode de réalisation alternatif, chacune des deux coques métalliques 21a, 21b s'étend autour de l'âme 14 depuis l'intrados jusqu'à l'extrados, de sorte que la première des deux coques métalliques 21a est globalement positionnée au niveau du bord d'attaque de la pale et la deuxième des deux coques métalliques 21b est globalement positionnée au niveau du bord de fuite de la pale.

Un positionnement des coques métalliques 21a, 21b sur l'intrados et sur l'extrados présente l'avantage d'être plus facilement usinable, la forme de chacune des deux coques métalliques 21a, 21b étant relativement plate dans cette configuration, tandis qu'un positionnement des coques métalliques 21a, 21b au niveau des bord d'attaque et bord de fuite apporte une meilleure réponse des coques 21a, 21b aux sollicitations en flexion.

Outre la pale à profil aérodynamique 12 et le longeron 13, l'aube 7 peut comprendre une pièce de conformation 23 en matériau rigide alvéolé. La pièce de conformation 23 est alors fixée sur le longeron comprenant les coques métalliques et positionnée dans la cavité de la pale formée par la déliaison. Selon ce mode de réalisation, les dimensions de la cavité permettent donc l'introduction de la mousse et du longeron 13 dans la cavité.

Le matériau rigide alvéolé est préférentiellement une mousse de polyuréthane. Alternativement, le matériau rigide alvéolé peut être un matériau en nid d'abeille d'aluminium préalablement étanchéifié.

La pièce de conformation 23 permet de donner l'épaisseur et la forme souhaitée à la pale à profil aérodynamique 12 de l'aube 7, tout en utilisant un matériau plus léger que d'autres éléments de la pale.

### Procédé de fabrication de l'aube

L'invention concerne également un procédé de fabrication d'une aube 7 telle que précédemment décrite comprenant une pale à profil aérodynamique 12 et un longeron 13, le longeron 13 comprenant lui-même une âme en matériau composite 14 et deux coques métalliques 21a, 21b. En référence à la figure 6, le procédé de fabrication de l'aube 7 comprend les étapes successives de :
- réaliser 101 l'âme de longeron en matériau composite 14 comprenant une première partie et une deuxième partie,
- fixer 102 les deux coques métalliques 21a, 21b sur l'âme du longeron 14, de sorte que chacune des deux coques métalliques 21a, 21b s'étendent sur la deuxième partie et se prolongent sur la première partie,
- réaliser 103 une ébauche fibreuse par tissage tridimensionnel de torons de fibres, l'ébauche présentant une déliaison formant une cavité,
- mettre en forme 104 l'ébauche fibreuse pour obtenir une préforme à profil aérodynamique, la mise en forme comprenant l'insertion de la première partie du longeron 13 à l'intérieur de la cavité,
- injecter 105 une résine dans un moule contenant la première ébauche fibreuse et le longeron 13 pour obtenir une aube 7 comprenant une pale à profil aérodynamique 12 ayant un premier renfort fibreux densifié par une matrice, la première partie du longeron 13 s'étendant à l'intérieur de la cavité de la pale 12, et la deuxième partie du longeron 13 formant le pied d'aube 9.

### Réalisation 101 de l'âme en matériau composite 14 du longeron 13

La réalisation 101 de l'âme en matériau composite 14 comprend la préparation du deuxième renfort fibreux puis l'injection de la deuxième matrice pour noyer le deuxième renfort fibreux.

**Selon un mode** de réalisation préférentiel, le deuxième renfort fibreux est préparé par tissage tridimensionnel de torons de trame et par réalisation, lors du tissage, d'une déliaison autour d'un insert d'une pièce de conformation, de sorte que la pièce de conformation se retrouve dans une cavité du deuxième renfort fibreux. Ce mode de réalisation présente l'avantage de permettre de bien contrôler l'épaisseur de l'âme du longeron. Le tissage permet de disposer des bons entrelacements de fibres pour obtenir les caractéristiques mécaniques souhaitées du deuxième renfort fibreux dans la résine.

La pièce de conformation peut être une mousse de polyuréthane préalablement usinée. Alternativement à la mousse, on peut utiliser des matériaux en nid d'abeille en papier nomex ou en aluminium. Les trames utilisées peuvent être des fibres de carbone. Alternativement, on peut utiliser des fibres de verre ou des fibres d'aramide.

Optionnellement, le deuxième renfort fibreux est tissé de sorte que la raideur du deuxième renfort fibreux varie sur la largeur et/ou l'épaisseur dudit renfort fibreux. Avantageusement, le deuxième renfort fibreux est tissé de sorte que la raideur diminue lorsqu'on parcourt le deuxième renfort fibreux depuis l'intérieur du deuxième renfort fibreux vers l'extérieur du deuxième renfort fibreux.

Puis, le deuxième renfort fibreux est positionné dans un moule rigide et ferme. Le moule donne au deuxième renfort fibreux la forme dans laquelle le deuxième renfort fibreux va être figé. Une résine liquide est ensuite injectée à basse pression dans le moule, selon un procédé dit de « moulage par transfert de résine » connu de l'homme du métier sous l'acronyme RTM. Ce procédé permet d'obtenir des pièces composites présentant un bon état de surface sur toute leur surface.

On injecte préférentiellement une résine époxy suffisamment fluide pour une bonne imprégnation. La résine époxy apporte de bonnes caractéristiques mécaniques, en particulier de bonnes caractéristiques de cohésion de la matière. Alternativement, on peut utiliser toute autre résine thermodurcissable ou encore une résine thermoplastique qui sont des variantes de réalisation connues de l'homme du métier.

Enfin, il est possible d'usiner les extrémités de l'âme 14 fixée par la résine pour définir des facettes 22 qui seront utilisées en tant que références dimensionnelles, pour le positionnement relatif des deux coques métalliques 21a, 21b.

Alternativement, le deuxième renfort fibreux peut être réalisé par l'empilement de plusieurs couches de renfort fibreux, chaque couche étant préparée par tissage tridimensionnel de torons de trames. Puis l'empilement de couches est imprégné de résine. Le surplus de fibres dans le sens de la longueur est découpé. Enfin, l'ensemble peut être légèrement usiné pour donner la forme finale à la pièce. Ainsi, une unique injection de résine est préférentiellement réalisée dans le deuxième renfort fibreux comprenant l'empilement des différentes couches de renfort fibreux car cela permet d'obtenir un ensemble plus homogène que ne le permettrait la superposition de plusieurs couches ayant été préalablement imprégnées de résine dans des étapes d'injection distinctes.

Alternativement encore, le deuxième renfort fibreux peut être préparé par enroulement d'une ou plusieurs couches de renfort fibreux. La couche de renfort fibreux enroulée sur elle-même est ensuite positionnée dans un moule et injectée avec la résine.

Optionnellement, on peut tisser les couches de renfort fibreux de sorte à diminuer la raideur du deuxième renfort fibreux lorsqu'on parcourt le deuxième renfort fibreux depuis l'intérieur du deuxième renfort fibreux vers l'extérieur du deuxième renfort fibreux.

Alternativement et de façon non limitative, on peut utiliser du tissage bidirectionnel, unidirectionnel ou du composite tressé.

### Fixation 102 des deux coques métalliques 21a, 21b sur l'âme du longeron 14

De façon non limitative, les deux coques métalliques 21a, 21b sont fabriquées en : titane, en alliage de titane (par exemple en ta6v), en acier ou en aluminium.

Les deux coques métalliques 21a, 21b sont réalisées préférentiellement par un procédé de forge éventuellement complété par de l'usinage mécanique et/ou chimique.

Au cours du procédé de forge, le matériau choisi est déformé par choc ou par pressage entre deux outils, à froid ou à chaud, de sorte à épouser la forme souhaitée. Comparativement au moulage, le procédé de forge présente l'avantage d'aboutir à des coques 21a, 21b présentant de bonnes caractéristiques métalliques via une organisation de la matière et une conformation précise permettant de limiter les usinages ultérieurs.

L'usinage chimique ou mécanique, en enlevant de la matière, permet de donner à chacune des deux coques métalliques la forme et les dimensions voulues. Par exemple, l'usinage peut comprendre la formation de facettes complémentaires des facettes 22 usinées sur l'âme en matériau composite 14 pour permettre le positionnement des coques métalliques 21a, 21b sur l'âme 14.

La surface de l'âme en matériau composite 14 est traitée préalablement à la fixation des deux coques métalliques 21a, 21b. L'objectif du traitement est d'obtenir la bonne rugosité et d'améliorer l'état de surface du matériau composite en éliminant les poussières et les corps gras. Le traitement de la surface de l'âme en matériau composite 14 peut comprendre un sablage.

On rapporte ensuite les deux coques métalliques 21a, 21b autour de la partie composite du longeron 13, éventuellement par assemblage mécanique, par exemple par vissage, préférentiellement par collage. La polymérisation du film de colle peut être réalisée en autoclave, sous vide. Le traitement préalable de la surface de l'âme en matériau composite 14 assure un bon collage.

Dans le cas où des facettes ont été usinées sur l'âme en matériau composite 14 et sur les deux coques métalliques 21a, 21b, on positionne chacune des deux coques 21a, 21b contre les facettes 22. Les facettes 22 permettent de définir un positionnement relatif de chacune des coques 21a, 21b par rapport à l'âme 14.

On peut finalement usiner le longeron 13 ainsi assemblé pour parfaire sa géométrie extérieure finale.

### Réalisation 103 de la première ébauche fibreuse

On réalise la première ébauche fibreuse par tissage tridimensionnel de torons de trames. La première ébauche fibreuse est tissée de sorte à présenter une déliaison formant une cavité qui s'étend depuis une première ouverture 25 à une extrémité de la première ébauche fibreuse située au niveau du pied d'aube 9.

La déliaison est préférentiellement délimitée en amont par des premiers entrecroisements 26a entre les torons de trame et en aval par des deuxièmes entrecroisements 26b entre les trames. **En** outre, une distance mesurée entre un premier entrecroisement 26a et un deuxième entrecroisement 26b des torons de trames 26 délimitant la déliaison augmente depuis la première ouverture vers l'intérieur de la cavité sur au moins une portion de la cavité.

La cavité peut s'étendre jusqu'à une deuxième ouverture 24 débouchant, par exemple, dans un bord d'attaque de la pale.

### Mise en forme 104 de la première ébauche fibreuse et injection 105 de la résine

Optionnellement, on peut assembler le longeron 13 avec une pièce de conformation 23 en matériau rigide alvéolé, le matériau rigide alvéolé étant préférentiellement une mousse de polyuréthane préalablement usinée.

On assemble le longeron 13 avec la pièce de conformation 23 par collage, préférentiellement avec une colle polymérisable à température ambiante. Si l'âme en matériau composite 14 comprend des facettes 22, on peut utiliser lesdites facettes 22 pour positionner correctement la pièce de conformation 23.

On prépare ensuite la surface du longeron 13 par voie chimique ou par voie sèche, par exemple par laser ou par ponçage très léger. Le traitement de la surface du longeron 13 permet notamment d'obtenir un état de surface présentant une bonne granulométrie pour les assemblages par collage.

On peut ensuite déposer un film de colle sur la première partie du longeron 13, et éventuellement sur la pièce de conformation 23 si la pièce de conformation 23 est présente.

Puis, on met en forme la première ébauche fibreuse pour obtenir une préforme à profil aérodynamique, on maintient dans un outillage la préforme, et on insère le longeron 13 dans la cavité délimitée par la déliaison de la première ébauche fibreuse de sorte que, à l'issue de l'insertion, la première partie se trouve insérée à l'intérieur de la cavité et la deuxième partie formant le pied d'aube 9 ressort par la première ouverture de la cavité. Si on a préalablement assemblé le longeron 13 avec une pièce de conformation 23, c'est l'ensemble comprenant la première partie et la pièce de conformation 23 qui se trouve inséré à l'intérieur de la cavité. On place l'ensemble comprenant la préforme, le longeron 13 et optionnellement la pièce de conformation 23 avant imprégnation par la résine.

L'assemblage du longeron 13 avec la pièce de conformation 23 préalablement à leur insertion dans la cavité délimitée par la déliaison permet avantageusement de contrôler le positionnement relatif du longeron 13 et de la pièce 23 à l'intérieur de la cavité.

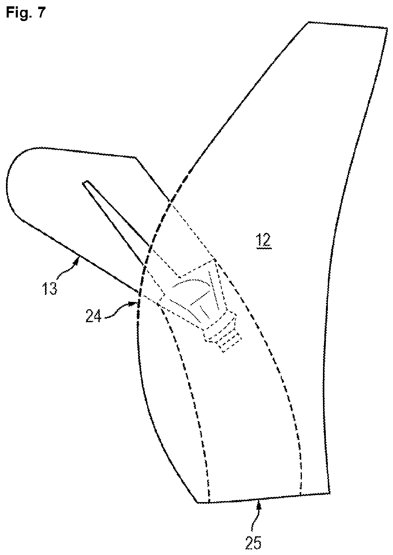

**En** référence à la figure 7, si la déliaison de l'ébauche fibreuse est prolongée de sorte à comporter une deuxième ouverture 24 dans la ligne de bord d'attaque de la pale, le longeron est inséré à l'intérieur de la cavité formée par la déliaison de l'ébauche fibreuse par la deuxième ouverture 24, jusqu'à ce que la deuxième partie formant le pied d'aube 9 ressorte par la première ouverture 25 au niveau de l'extrémité du pied de pale. La restriction de section au niveau de la première ouverture 25 assure la rétention de la première partie du longeron 13 et de l'éventuelle pièce de conformation 23.

On injecte ensuite une résine liquide dans le moule contenant la première ébauche fibreuse et le longeron 13 selon le procédé **RTM** pour figer la pale à profil aérodynamique 12, le longeron 13 et l'éventuelle pièce de conformation 23 étant en place au moment de la fixation.

On obtient ainsi une aube 7 comprenant une pale à profil aérodynamique 12 ayant un premier renfort fibreux densifié par une matrice, la première partie du longeron 13 s'étendant à l'intérieur de la cavité de la pale 12, et la deuxième partie du longeron 13 formant le pied d'aube 9.

On ajoute enfin une protection métallique sur le bord d'attaque de l'aube 7 et/ou optionnellement un système de dégivrage. La protection métallique peut comprendre un bouclier en titane pour éviter la détérioration du matériau composite de l'aube 7, d'une part par effet d'abrasion de particules présentes dans l'air telles que des grains de sable ou particules de glace, d'autre par effet des chocs tels que ceux résultant d'un contact avec de la grêle ou un oiseau. Alternativement, on pourrait utiliser un bouclier comprenant une couche de tissu.

## Revendications

1. Aube (7) comprenant :
- une pale à profil aérodynamique (12) comprenant un premier renfort fibreux obtenu par tissage tridimensionnel et une première matrice dans laquelle est noyé le premier renfort fibreux, une partie de la pale à profil aérodynamique (12) comprenant une cavité formée par une déliaison du premier renfort fibreux,
- un pied d'aube (9) destinée à être relié à un mécanisme de calage variable de l'aube, et
- un longeron (13) comprenant une âme en matériau composite (14) et deux coques métalliques (21a, 21b) fixées sur l'âme en matériau composite (14), de part et d'autre de l'âme en matériau composite (14), l'âme en matériau composite (14) comprenant une première partie s'étendant à l'intérieur de la cavité de la pale, et une deuxième partie formant le pied d'aube (9),
les deux coques métalliques (21a,21b) fixées sur l'âme en matériau composite (14) s'étendant sur la deuxième partie et se prolongeant sur la première partie à l'intérieur de la cavité de la pale à profil aérodynamique (12).

2. Aube (7) selon la revendication 1, dans laquelle le pied d'aube (9) présente une forme de révolution autour d'un axe de calage (Y) de l'aube (7), et la première partie présente une première épaisseur, mesurée dans un plan passant par l'axe de calage (Y) et un point d'intersection entre une ligne de bord d'attaque de la pale et une ligne de corde de limite de veine située à une limite entre la pale et le pied, qui augmente depuis la corde de limite de veine vers l'intérieur de la pale (12) sur au moins une portion (15) de la première partie.

3. Aube (7) selon la revendication 2, dans laquelle la première partie présente une deuxième épaisseur, mesurée dans un deuxième plan, perpendiculaire au premier plan, qui diminue depuis la corde de limite de veine vers l'intérieur de la pale (12) sur la portion (15) de la première partie.

4. Aube (7) selon l'une des revendications 1 à 3, dans laquelle le premier renfort fibreux comprend des torons de trames (26) s'étendant depuis le bord d'attaque jusqu'au bord de fuite et délimitant la déliaison, la déliaison étant délimitée en amont par des premiers entrecroisement (26a) entre les torons de trame et aval par des deuxièmes entrecroisement (26b) entre les trames.

5. Aube (7) selon les revendications 2 ou 3 et 4, dans laquelle une distance mesurée entre un premier entrecroisement (26a) et un deuxième entrecroisement (26b) des torons de trames (26) délimitant la déliaison, dans un plan perpendiculaire à l'axe de calage (Y), augmente depuis le pied d'aube (9) vers l'intérieur de la pale (12).

6. Aube (7) selon l'une des revendications 1 à 5, comprenant une pièce de conformation (23) en matériau rigide alvéolé, le matériau rigide alvéolé étant préférentiellement une mousse de polyuréthane, la pièce de conformation (23) étant fixée sur la première partie du longeron (13) et positionnée dans la cavité de la pale à profil aérodynamique (12).

7. Aube (7) selon l'une des revendications 1 à 6 dans laquelle les deux coques métalliques (21a, 21b) fixées sur l'âme en matériau composite (14) sont disjointes entre elles sans contact direct.

8. Aube (7) selon l'une des revendications 1 à 7 dans laquelle la première partie de l'âme en matériau composite (14) comprend des facettes (22) et chacune des deux coques métalliques (21a, 21b) présente des facettes propres à être positionnées en contact avec les facettes (22) de la première partie, de sorte à définir un positionnement relatif de chacune des coques (21a, 21b) par rapport à l'âme (14).

9. Aube (7) selon l'une des revendications 1 à 8, dans laquelle la pale à profil aérodynamique (12) présente une première extrémité reliée au pied d'aube (9) et une deuxième extrémité, opposée à la première extrémité, et dans laquelle la déliaison du premier renfort fibreux formant la cavité dans laquelle est insérée la première partie du longeron s'étend depuis une première ouverture débouchant à la première extrémité jusqu'à une deuxième ouverture débouchant dans un bord d'attaque de la pale.

10. Aube (7) selon l'une des revendications 1 à 9, dans laquelle le premier renfort fibreux est obtenu par tissage tridimensionnel de torons de fibres de carbone et la première matrice comprend une résine époxy.

11. Aube (7) selon l'une des revendications 1 à 10, dans laquelle l'âme en matériau composite (14) du longeron (13) comprend un deuxième renfort fibreux obtenu par tissage tridimensionnel et une deuxième matrice dans laquelle est noyé le deuxième renfort fibreux.

12. Aube (7) selon la revendication 11, dans laquelle le deuxième renfort fibreux comprend une pluralité de couches de renfort fibreux superposées entre elles, et disposées de telle sorte les couches de renfort fibreux présentent des raideurs qui diminuent lorsque l'on parcourt le deuxième renfort fibreux depuis l'intérieur du deuxième renfort fibreux vers l'extérieur du deuxième renfort fibreux.

13. Aube (7) selon l'une des revendications 1 à 12, dans laquelle le pied d'aube (9) présente une forme de révolution autour d'un axe de calage (Y) de l'aube (7), et la deuxième partie présente une dimension radiale mesurée selon un axe radial perpendiculaire à l'axe de calage (Y), qui augmente continument puis diminue continument lorsque l'on parcourt la deuxième partie le long de l'axe de calage (Y) en s'éloignant de la première partie, de manière à former un renflement (16a).

14. Ensemble d'aube comprenant :
- une aube (7) selon la revendication 13, et
- un dispositif d'attache (10) comprenant une première pièce d'attache (18) propre à venir en appui sur une portion du pied d'aube (9) dans laquelle la dimension radiale augmente continument, une deuxième pièce d'attache (19) propre à venir en appui sur une portion du pied d'aube dans laquelle la dimension radiale diminue continument, et une troisième pièce d'attache (20) présentant des reliefs propre à coopérer avec des reliefs de la première pièce d'attache (18) pour bloquer la première pièce d'attache (18) en translation selon l'axe de calage (Y) par rapport à la troisième pièce d'attache (20), la deuxième pièce d'attache (19) présentant un orifice (29) et la troisième pièce d'attache (20) présentant un orifice (30) destiné à être mis en regard de l'orifice (29) de la deuxième pièce d'attache (19), de manière à permettre l'insertion d'un organe de blocage dans les orifices (29, 30) en regard afin de maintenir en compression le renflement (16a) entre la première pièce d'attache (18) et la deuxième pièce d'attache (19).

15. Procédé de fabrication d'une aube (7) conforme à l'une des revendications 1 à 14 comprenant des étapes successives de :
- réaliser (101) l'âme de longeron en matériau composite (14) comprenant une première partie et une deuxième partie,
- fixer (102) les deux coques métalliques (21a, 21b) sur l'âme du longeron (14), de sorte que chacune des deux coques métalliques (21a, 21b) s'étendent sur la deuxième partie et se prolongent sur la première partie,
- réaliser (103) une ébauche fibreuse par tissage tridimensionnel de torons de fibres, l'ébauche présentant une déliaison formant une cavité,
- mettre en forme (104) l'ébauche fibreuse pour obtenir une préforme à profil aérodynamique, la mise en forme comprenant l'insertion de la première partie du longeron (13) à l'intérieur de la cavité,
- injecter (105) une résine dans un moule contenant la première ébauche fibreuse et le longeron (13) pour obtenir une aube (7) comprenant une pale à profil aérodynamique (12) ayant un premier renfort fibreux densifié par une matrice, la première partie du longeron (13) s'étendant à l'intérieur de la cavité de la pale (12), et la deuxième partie du longeron (13) formant le pied d'aube (9).

16. Procédé selon la revendication 15, dans lequel l'étape de mettre en forme l'ébauche fibreuse est précédée d'une étape d'assembler le longeron (13) avec une pièce de conformation (23) en matériau rigide alvéolé, le matériau rigide alvéolé étant préférentiellement une mousse de polyuréthane, de sorte que la première partie du longeron (13) est insérée avec la pièce de conformation (23) à l'intérieur de la cavité formée par la déliaison de l'ébauche fibreuse.

17. Procédé selon l'une des revendications 15 ou 16, dans lequel la déliaison de l'ébauche fibreuse est prolongée jusqu'à une deuxième ouverture (24) dans la ligne de bord d'attaque de la pale (12), et le longeron est inséré à l'intérieur de la cavité formée par la déliaison de l'ébauche fibreuse par l'ouverture.

18. Procédé selon l'une des revendications 15 à 17, dans lequel l'étape de réaliser l'âme (14) du longeron (13) comprend usiner un renflement présentant des facettes (22) sur une extrémité de la première partie de l'âme (14) et l'étape de fixer les deux coques métalliques (21a, 21b) sur l'âme (14) comprend positionner chacune des deux coques (21a, 21b) contre les facettes (22), de sorte à définir un positionnement relatif de chacune des coques (21a, 21b) par rapport à l'âme (14).

## Patentansprüche

1. Schaufel (7), umfassend:
- ein Blatt mit aerodynamischem Profil (12), umfassend eine erste Faserverstärkung, die durch dreidimensionales Weben hergestellt ist, und eine erste Matrix, in die die erste Faserverstärkung eingebettet ist, wobei ein Teil des Blatts mit aerodynamischem Profil (12) einen Hohlraum umfasst, der durch eine Entbindung der ersten Faserverstärkung gebildet ist,
- einen Schaufelfuß (9), der zur Verbindung mit einem Mechanismus zur variablen Einstellung des Blatts bestimmt ist, und
- einen Längsträger (13), der einen Kern aus Verbundwerkstoff (14) und zwei Metallschalen (21a, 21b) umfasst, die auf beiden Seiten des Kerns aus Verbundwerkstoff (14) am Kern aus Verbundwerkstoff (14) befestigt sind, wobei der Kern aus Verbundwerkstoff (14) einen ersten Teil, der sich innerhalb des Hohlraums des Blatts erstreckt, und einen zweiten Teil, der den Schaufelfuß (9) bildet, umfasst,
wobei sich die beiden am Kern aus Verbundwerkstoff (14) befestigten Metallschalen (21a, 21b) auf dem zweiten Teil erstrecken und sich auf dem ersten Teil innerhalb des Hohlraums des Blatts mit aerodynamischem Profil (12) fortsetzen.

2. Schaufel (7) nach Anspruch 1, wobei der Schaufelfuß (9) eine Rotationsform um eine Einstellachse (Y) der Schaufel (7) aufweist und der erste Teil eine erste Dicke aufweist, gemessen in einer Ebene, die durch die Einstellachse (Y) und einen Schnittpunkt zwischen einer Vorderkantenlinie des Blatts und einer Kanalbegrenzungs-Sehnenlinie an einer Grenze zwischen dem Blatt und dem Fuß verläuft, die von der Kanalbegrenzungs-Sehnenlinie zum Inneren des Blatts (12) über mindestens einen Abschnitt (15) des ersten Teils zunimmt.

3. Schaufel (7) nach Anspruch 2, wobei der erste Teil eine zweite Dicke aufweist, gemessen in einer zweiten Ebene, die senkrecht zur ersten Ebene steht, die von der Kanalbegrenzungs-Sehne zum Inneren des Blatts (12) über den Abschnitt (15) des ersten Teils abnimmt.

4. Schaufel (7) nach einem der Ansprüche 1 bis 3, wobei die erste Faserverstärkung Schusslitzen (26) umfasst, die sich von der Vorderkante bis zur Hinterkante erstrecken und die Entbindung begrenzen, wobei die Entbindung stromaufwärts durch erste Verflechtungen (26a) zwischen den Schusslitzen und stromabwärts durch zweite Verflechtungen (26b) zwischen den Schussfäden begrenzt wird.

5. Schaufel (7) nach den Ansprüchen 2 oder 3 und 4, wobei ein Abstand, gemessen zwischen einer ersten Verflechtung (26a) und einer zweiten Verflechtung (26b) der die Entbindung begrenzenden Schusslitzen (26) in einer Ebene senkrecht zur Einstellachse (Y) vom Schaufelfuß (9) zum Inneren des Blatts (12) zunimmt.

6. Schaufel (7) nach einem der Ansprüche 1 bis 5, umfassend ein Formteil (23) aus einem starren Wabenmaterial, wobei das starre Wabenmaterial vorzugsweise ein Polyurethanschaum ist, wobei das Formteil (23) am ersten Teil des Längsträgers (13) befestigt und im Hohlraum des Blatts mit aerodynamischem Profil (12) positioniert ist.

7. Schaufel (7) nach einem der Ansprüche 1 bis 6, wobei die beiden an dem Kern aus Verbundwerkstoff (14) befestigten Metallschalen (21a, 21b) ohne direkten Kontakt voneinander getrennt sind.

8. Schaufel (7) nach einem der Ansprüche 1 bis 7, wobei der erste Teil des Kerns aus Verbundwerkstoff (14) Facetten (22) umfasst und jede der beiden Metallschalen (21a, 21b) Facetten aufweist, die imstande sind, im Kontakt mit den Facetten (22) des ersten Teils positioniert zu werden, so dass eine relative Positionierung jeder der Schalen (21a, 21b) in Bezug auf den Kern (14) definiert wird.

9. Schaufel (7) nach einem der Ansprüche 1 bis 8, wobei das Blatt mit aerodynamischem Profil (12) ein erstes Ende aufweist, das mit dem Schaufelfuß (9) verbunden ist, und ein zweites Ende gegenüber dem ersten Ende, und wobei sich die Entbindung der ersten Faserverstärkung, die den Hohlraum bildet, in den der erste Teil des Längsträgers eingeführt ist, von einer ersten Öffnung, die am ersten Ende mündet, bis zu einer zweiten Öffnung erstreckt, die in einer Vorderkante des Blatts mündet.

10. Schaufel (7) nach einem der Ansprüche 1 bis 9, wobei die erste Faserverstärkung durch dreidimensionales Weben von Kohlenstofffaserlitzen erhalten wird und die erste Matrix ein Epoxidharz umfasst.

11. Schaufel (7) nach einem der Ansprüche 1 bis 10, wobei der Kern aus Verbundwerkstoff (14) des Längsträgers (13) eine zweite Faserverstärkung umfasst, die durch dreidimensionales Weben erhalten wird, und eine zweite Matrix, in die die zweite Faserverstärkung eingebettet ist.

12. Schaufel (7) nach Anspruch 11, wobei die zweite Faserverstärkung eine Vielzahl von übereinanderliegenden Faserverstärkungsschichten umfasst, und derart angeordnet sind, dass die Faserverstärkungsschichten Steifigkeiten aufweisen, die abnehmen, wenn die zweite Faserverstärkung von innerhalb der zweiten Faserverstärkung nach außerhalb der zweiten Faserverstärkung durchquert wird.

13. Schaufel (7) nach einem der Ansprüche 1 bis 12, wobei der Schaufelfuß (9) eine Rotationsform um eine Einstellachse (Y) der Schaufel (7) aufweist und der zweite Teil eine radiale Abmessung aufweist, die, gemessen gemäß einer zur Einstellachse (Y) senkrechten radialen Achse, kontinuierlich zunimmt, dann kontinuierlich abnimmt, wenn der zweite Teil entlang der Einstellachse (Y) durchquert wird, bei zunehmender Entfernung vom ersten Teil, so dass eine Wölbung (16a) gebildet wird.

14. Schaufelanordnung, umfassend:
- eine Schaufel (7) nach Anspruch 13, und
- eine Befestigungsvorrichtung (10), umfassend ein erstes Befestigungsteil (18), das imstande ist, auf einem Abschnitt des Schaufelfußes (9) aufzuliegen, wobei die radiale Abmessung kontinuierlich zunimmt, ein zweites Befestigungsteil (19), das imstande ist, auf einem Abschnitt des Schaufelfußes aufzuliegen, wobei die radiale Abmessung kontinuierlich abnimmt, und ein drittes Befestigungsteil (20), das Reliefs aufweist, die imstande sind, mit Reliefs des ersten Befestigungsteils (18) zusammenzuwirken, um das erste Befestigungsteil (18) translatorisch gemäß der Einstellachse (Y) relativ zum dritten Befestigungsteil (20) zu arretieren, wobei das zweite Befestigungsteil (19) eine Öffnung (29) aufweist und das dritte Befestigungsteil (20) eine Öffnung (30) aufweist, die dazu bestimmt ist, der Öffnung (29) des zweiten Befestigungsteils (19) derart zugewandt angeordnet zu werden, dass das Einführen eines Arretierorgans in die zugewandten Öffnungen (29, 30) ermöglicht wird, um die Wölbung (16a) zwischen dem ersten Befestigungsteil (18) und dem zweiten Befestigungsteil (19) komprimiert zu halten.

15. Verfahren zur Herstellung einer Schaufel (7) nach einem der Ansprüche 1 bis 14, das die folgenden aufeinanderfolgenden Schritte umfasst:
- Herstellen (101) des Längsträgerkerns aus Verbundwerkstoff (14), der einen ersten Teil und einen zweiten Teil umfasst,
- Befestigen (102) der beiden Metallschalen (21a, 21b) am Längsträgerkern (14), so dass sich jede der beiden Metallschalen (21a, 21b) auf dem zweiten Teil erstreckt und sich auf dem ersten Teil fortsetzt,
- Herstellen (103) eines faserigen Rohlings durch dreidimensionales Weben von Faserlitzen, wobei der Rohling eine Entbindung aufweist, die einen Hohlraum bildet,
- Formen (104) des Faserrohlings, um eine Vorform mit aerodynamischem Profil zu erhalten, wobei das Formen das Einführen des ersten Teils des Längsträgers (13) in den Hohlraum umfasst,
- Einspritzen (105) eines Harzes in eine Form, die den ersten Faserrohling und den Längsträger (13) enthält, um eine Schaufel (7) zu erhalten, die ein Blatt mit aerodynamischem Profil (12) mit einer ersten Faserverstärkung umfasst, die durch eine Matrix verdichtet ist, wobei sich der erste Teil des Längsträgers (13) innerhalb des Hohlraums des Blatts (12) erstreckt und der zweite Teil des Längsträgers (13) den Schaufelfuß bildet (9) bildet.

16. Verfahren nach Anspruch 15, wobei dem Schritt des Formens des Faserrohlings ein Schritt des Zusammenfügens des Längsträgers (13) mit einem Formteil (23) aus starrem Wabenmaterial vorausgeht, wobei das starre Wabenmaterial vorzugsweise ein Polyurethanschaum ist, so dass der erste Teil des Längsträgers (13) mit dem Formteil (23) in den durch die Entbindung des Faserrohlings gebildeten Hohlraum eingeführt wird.

17. Verfahren nach einem der Ansprüche 15 oder 16, wobei die Entbindung des Faserrohlings bis zu einer zweiten Öffnung (24) in der Vorderkantenlinie des Blatts (12) verlängert wird und der Längsträger in den durch die Entbindung des Faserrohlings durch die Öffnung gebildeten Hohlraum eingeführt wird.

18. Verfahren nach einem der Ansprüche 15 bis 17, wobei der Schritt des Herstellens des Kerns (14) des Längsträgers (13) das Fertigen einer Wölbung mit Facetten (22) an einem Ende des ersten Teils des Kerns (14) umfasst und der Schritt des Befestigens der beiden Metallschalen (21a, 21b) am Kern (14) das Positionieren jeder der beiden Schalen (21a, 21b) an den Facetten (22) umfasst, so dass eine relative Positionierung jeder der Schalen (21a, 21b) relativ zum Kern (14) definiert wird.

## Claims

1. A blade (7) comprising:
- an airfoil (12) with an aerodynamic profile comprising a first fibrous reinforcement obtained by three-dimensional weaving and a first matrix in which the first fibrous reinforcement is embedded, a part of the airfoil (12) with an aerodynamic profile comprising a cavity formed by a debinding of the first fibrous reinforcement,
- a blade root (9) intended to be linked to a variable pitch mechanism of the blade, and
- a spar (13) comprising a core (14) of composite material and two metallic shells (21a, 21b) attached to the core (14) of composite material, on either side of the core (14) of composite material, the core (14) of composite material comprising a first part extending inside the cavity of the airfoil, and a second part forming the blade root (9),
the two metallic shells (21a,21b) attached to the core (14) of composite material extending over the second part and continuing on the first part inside the cavity of the airfoil (12) with an aerodynamic profile.

2. The blade (7) according to claim 1, wherein the blade root (9) has an axisymmetrical shape around a pitch axis (Y) of the blade (7), and the first part has a first thickness, measured in a plane passing through the pitch axis (Y) and an intersection point between a leading edge line of the airfoil and a stream limit chord line located between the airfoil and the root, which increases from the stream limit chord to the interior of the airfoil (12) over at least a portion (15) of the first part.

3. The blade (7) according to claim 2, wherein the first part has a second thickness, measured in a second plane, perpendicular to the first plane, which decreases from the stream limit chord to the interior of the airfoil (12) over the portion (15) of the first part.

4. The blade (7) according to one of claims 1 to 3, wherein the first fibrous reinforcement comprises weft strands (26) extending from the leading edge to the trailing edge and delimiting the debinding, the debinding being delimited upstream by first interweavings (26a) between the weft strands and downstream by second interweavings (26b) between the wefts.

5. The blade (7) according to claims 2 or 3 and 4, wherein a distance measured between a first interweaving (26a) and a second interweaving (26b) of the weft strands (26) delimiting the debinding, in a plane perpendicular to the pitch axis (Y), increases from the blade root (9) to the interior of the airfoil (12).

6. The blade (7) according to one of claims 1 to 5, comprising a workpiece (23) of rigid cellular material, the rigid cellular material being preferably a polyurethane foam, the workpiece (23) being attached to the first part of the spar (13) and positioned in the cavity of the airfoil with an aerodynamic profile (12).

7. The blade (7) according to one of claims 1 to 6 wherein the two metallic shells (21a, 21b) attached to the core (14) of composite material are not joined together.

8. The blade (7) according to one of claims 1 to 7, wherein the first part of the core (14) of composite material comprises facets (22) and each of the two metal shells (21a, 21b) has facets able to be positioned in contact with the facets (22) of the first part, so as to define a relative positioning of each of the shells (21a, 21b) relative to the core (14).

9. The blade (7) according to one of claims 1 to 8, wherein the airfoil (12) with an aerodynamic profile has a first end connected to the blade root (9) and a second end, opposite to the first end, and wherein the debinding of the first reinforcement forming the cavity in which the first part of the spar is inserted extends from a first opening leading into the first end to a second opening leading into a leading edge of the airfoil.

10. The blade (7) according to one of claims 1 to 9, wherein the first fibrous reinforcement is obtained by three-dimensional weaving of strands of carbon fibers and the first matrix comprises an epoxy resin.

11. The blade (7) according to one of claims 1 to 10, wherein the core (14) of composite material of the spar (13) comprises a second fibrous reinforcement obtained by three-dimensional weaving and a second matrix in which the second fibrous reinforcement is embedded.

12. The blade (7) according to claim 11, wherein the second fibrous reinforcement comprises a plurality of layers of fibrous reinforcement stacked on one another, and arranged in such a manner that the layers of fibrous reinforcement have stiffnesses which decrease when the second fibrous reinforcement is followed from the interior of the second fibrous reinforcement to the outside of the second fibrous reinforcement.

13. The blade (7) according to one of claims 1 to 12, wherein the blade root (9) has an axisymmetric shape around a pitch axis (Y) of the blade (7), and the second part has a radial dimension, measured along a radial axis perpendicular to the pitch axis (Y), which increases continuously then decreases continuously when the second part is followed along the pitch axis (Y) while moving away from the first part, so as to form a hump (16a).

14. A blade assembly comprising:
- a blade (7) according to claim 13, and
- an attachment device (10) comprising a first attachment part (18) suited to being supported on a portion of the blade root (9) in which the radial dimension increases continuously, a second attachment part (19) suited to being supported on a portion of the blade root in which the radial dimension decreases continuously, and a third attachment part (20) having contours able to cooperate with contours of the first attachment part (18) to block the first attachment part (18) in translation along the pitch axis (Y) relative to the third attachment part (20), the second attachment part (19) having an aperture (29) and the third attachment part (20) having an aperture (30) intended to be facing the aperture (29) of the second attachment part (19), so as to allow the insertion of a blocking member into the facing apertures (29, 30) in order to hold in compression the hump (16a) between the first attachment part (18) and the second attachment part (19).

15. A method for manufacturing a blade (7) according to one of claims 1 to 14 comprising successive steps of:
- producing (101) the core (14) of composite material comprising a first part and a second part,
- attaching (102) the two metallic shells (21a, 21b) to the core of the spar (14), so that each of the two metallic shells (21a, 21b) extends over the second part and continue on the first part,
- producing (103) a fibrous blank by three-dimensional weaving of fiber strands, the blank having a debinding forming a cavity,
- forming (104) the fibrous blank to obtain a preform with an aerodynamic profile, the forming comprising the insertion of the first part of the spar (13) inside the cavity,
- injecting (105) a resin into a mold containing the first fibrous blank and the spar (13) to obtain a blade (7) comprising an airfoil with an aerodynamic profile (12) having a first fibrous reinforcement densified by a matrix, the first part of the spar (13) extending inside the cavity of the airfoil (12), and the second part of the spar (13) forming the blade root (9).

16. The method according to claim 15, wherein the step of forming the fibrous blank is preceded by a step of assembling the spar (13) with a workpiece (23) of rigid cellular material, the rigid cellular material preferably being a polyurethane foam, so that the first part of the spar (13) is inserted with the workpiece (23) inside the cavity formed by the debinding of the fibrous blank.

17. The method according to one of claims 15 or 16, wherein the debinding of the fibrous blank is continued to a second opening (24) in the leading edge line of the airfoil (12), and the spar is inserted inside the cavity formed by the debinding of the fibrous blank through the opening.

18. The method according to one of claims 15 to 17, wherein the step of producing the core (14) of the spar (13) comprises machining a hump having facets (22) on one end of the first part of the core (14) and the step of attaching the two metallic shells (21a, 21b) to the core (14) comprises positioning each of the two shells (21a, 21b) against the facets (22) so as to define a relative positioning of each of the shells (21a, 21b) relative to the core (14).
